Europäisches Patentamt

European Patent Office

Office européen des brevets

(19)

(11) Veröffentlichungsnummer: **0 349 762 B1**

(12) **EUROPÄISCHE PATENTSCHRIFT**

(45) Veröffentlichungstag der Patentschrift: **30.12.92**

(21) Anmeldenummer: **89109896.4**

(22) Anmeldetag: **01.06.89**

(51) Int. Cl.⁵: **B64D 11/06**

(54) **Sitz, insbesondere für einen Flugbegleiter.**

(30) Priorität: **04.07.88 DE 3822574**

(43) Veröffentlichungstag der Anmeldung:
**10.01.90 Patentblatt 90/02**

(45) Bekanntmachung des Hinweises auf die
Patenterteilung:
**30.12.92 Patentblatt 92/53**

(84) Benannte Vertragsstaaten:
**AT BE CH ES FR GB GR IT LI LU NL SE**

(56) Entgegenhaltungen:
**EP-A- 0 268 749**
**DE-U- 8 708 102**
**US-A- 4 460 215**

(73) Patentinhaber: **Deutsche Airbus GmbH**
**Kreetslag 10**
**W-2103 Hamburg 93(DE)**

(72) Erfinder: **Lehnert, Franzrudolf**
**Auf der Heide 31**
**W-6649 Weiskirchen(DE)**

Rank Xerox (UK) Business Services

## Beschreibung

Die( Erfindung bezieht sich auf einen Sitz nach dem Oberbegriff des Anspruchs 1.

Ein derartiger Sitz ist der EP-A-0 268 749 zu entnehmen. Diese zeigt gemäß Fig. 4 einen Sitz, insbesondere für einen Flugbegleiter, im wesentlichen bestehend aus einem an der umgebenden Struktur fest montierbaren Gestell sowie einem Sitzteil, mit einem vorderen und einem hinteren Bereich und einer Schale für das Rückenpolster, mit einem oberen und einem unteren Bereich, wobei der Sitzteil in einer in seinem hinteren Bereich angeordneten ersten Anlenkung schwenkbar ausgebildet ist, so daß der Sitzteil zwischen einer im wesentlichen horizontalen Gebrauchslage und einer im allgemeinen vertikalen Ruhelage schwenkbar ist, wobei die Schale für das Rückenpolster in ihrem oberen Bereich eine zweite Anlenkung derart aufweist, daß der untere Bereich der Schale für das Rückenpolster in unterschiedliche Positionen schwenkbar ist, wobei die Schale für das Rückenpolster in ihrem unteren Bereich in der ersten Anlenkung mit dem Sitzteil um eine Achse gelenkig verbunden ist, wobei ein um eine gestellfeste Achse schwenkbarer Traglenker vorgesehen ist, und wobei ein im oberen Bereich der Schale angeordnetes Gelenk eine Schwenkbewegung und eine Verschiebung zuläßt, so daß Traglenker mit der Schale im Prinzip einen Kurbeltrieb bildet. Dabei ist das Sitzteil innerhalb des Traglenkers geradlinig verschiebbar, so daß der Sitz sowohl im oberen Bereich als auch im unteren Bereich der Schale für das Rückenpolster jeweils ein Schiebegelenkpaar aufweist.

Demgemäß liegt der Erfindung die Aufgabe zugrunde, einen gattungsgemäßen Sitz derart auszubilden, daß das bisher für notwendig gehaltene zweite Schiebegelenkpaar am Traglenker wegfallen kann.

Diese Aufgabe wird bei einem gattungsgemäßen Sitz durch die kennzeichnenden Merkmale des Patentanspruchs 1 gelöst.

Dabei ist insbesondere von Vorteil, daß die geringere Anzahl der Schiebegelenke zu einer einfacheren Konstruktion führt.

Weitere vorteilhafte Ausgestaltungen der Erfindung sind in den Unteransprüchen angegeben.

Die Erfindung ist anhand der Zeichnung dargestellt und in der Beispielbeschreibung näher erläutert. Es zeigen

Fig. 1    eine Seitenansicht eines Flugbegleitersitzes,

Fig. 2    den Sitz nach Fig. 1 in einer ersten Gebrauchslage,

Fig. 3    den Sitz nach Fig 1 in einer zweiten Gebrauchslage,

Fig. 4    eine Verriegelung,

Fig. 5    eine Frontansicht eines Sitzes nach Fig. 1,

Fig. 6    die Seitenansicht des Sitzes nach Fig. 5,

Fig. 7    einen Sitz mit schwenkbarer Kopfstütze und

Fig. 8    den Sitz nach Fig. 7 in einer Gebrauchslage.

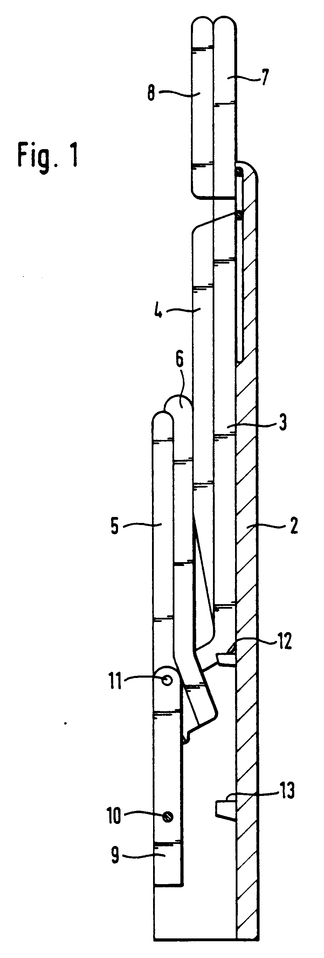

Fig 1 zeigt eine teilweise im Schnitt erscheinende Seitenansicht eines Sitzes 1, im wesentlichen bestehend aus einem Gestell 2, einer Schale 3 für das Rückenpolster 4, einer Schale 5 für ein Sitzpolster 6 und einer Schale 7 für ein Kopfpolster 8. Dabei ist ein Traglenker 9 um eine gestellfeste Drehachse 10 schwenkbar angeordnet, der seinerseits eine Drehachse 11 aufweist, in der die Schale 5 angelenkt ist. Im unteren Bereich des Gestells 2 sind ein erster Anschlag 12 und ein zweiter Anschlag 13 angeordnet. Zu beiden Seiten des Rückenpolsters 4 ist je eine hier nicht sichtbare ausschwenkbare Armlehne 14 angeordnet. Dieser Sitz kann an einer Kabinenwand und/oder am Fußboden der Kabine befestigt werden.

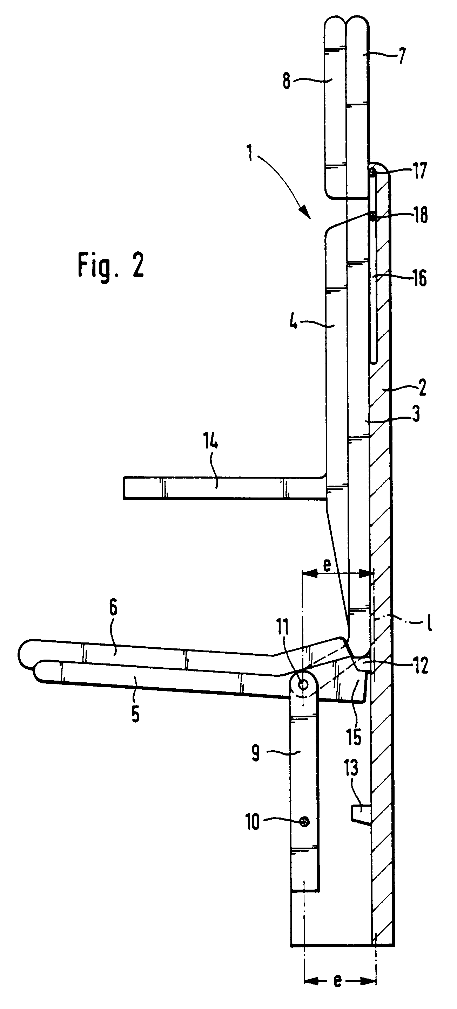

Fig. 2 zeigt den Sitz 1 nach Fig. 1, wieder teilweise geschnitten, in einer ersten Gebrauchslage mit den vorgenannten Elementen 1 bis 14. Dabei ist die aus der Schale 5 mit dem Sitzpolster 6 bestehende Sitzgruppe 5,6 um die Drehachse 11 in die gezeigte Gebrauchslage geklappt, wobei ein sitzschalenseitiger Anschlag 15 am gestellseitigen Anschlag 12 anliegt, so daß die Schale 5 damit eine Last aufnehmen kann. Das Herausklappen der Schale 5 in diese erste oder obere Gebrauchslage geschieht entgegen einer nicht gezeigten Feder bekannter Art. Bei Entlastung kehrt die Schale 5 aufgrund der Feder wieder in die Ruhelage zurück. Das Bild zeigt weiterhin eine in Gebrauchslage befindliche Armlehne 14. Diese ist auf an sich bekannte Weise schwenkbar ausgebildet, wobei durch einen hier nicht gezeigten Anschlag sichergestellt ist, daß die Lehne 14 eine im wesentlichen nach unten gerichtete Last aufnehmen kann. Das Gestell 2 weist in seinem oberen Bereich eine geradlinige Führung 16 für zwei Gleitelemente 17 und 18 auf, die ihrerseits fest mit der aus der Schale 7 und dem Kopfpolster 8 bestehenden Kopfstütze 7,8 verbunden sind. Damit ist die Kopfstütze 7,8 vertikal geführt. Die Schale 3 für das Rückenpolster 4 ist an ihrem oberen Ende mit dem Gleitelement 18 gelenkig verbunden. Die Drehachse 11, am unteren Ende der Schale 3, weist gegenüber der durch die Mittelpunkte der Gleitelemente 17 und 18 gezogenen Vertikalen einen Abstand e auf. Dies ergibt sich aus der in diesem Bereich gestrichelt gezeigten abgewinkelten Form der Schale 3.

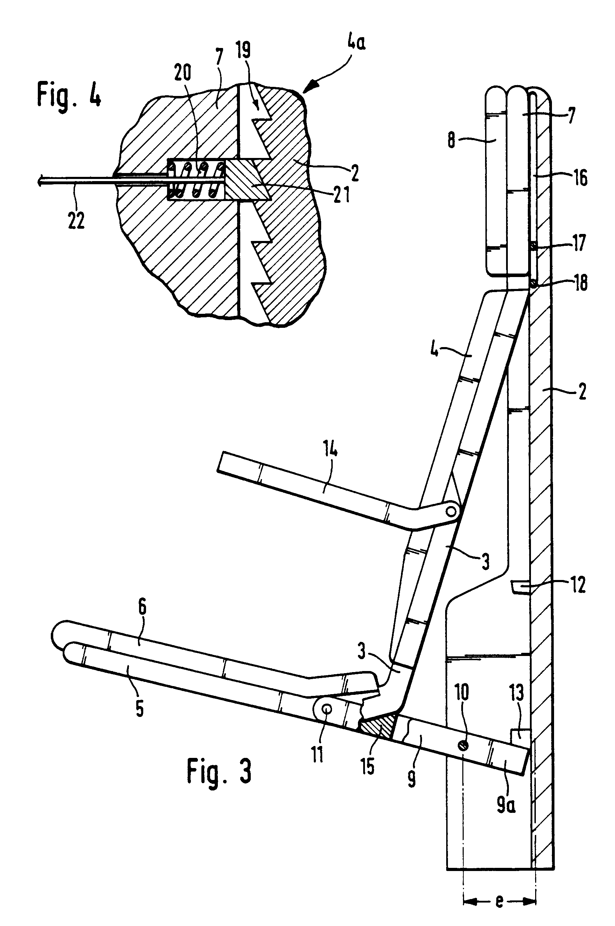

Fig. 3 zeigt den Sitz 1 nach Fig.2 in einer anderen Gebrauchslage. Diese Lage zeichnet sich aus durch eine Schräglage der aus der Schale 3 mit dem Rückenpolster 4 bestehenden Rückenlehne 3,4 und ergibt sich durch Schwenkung des Traglenkers 9 entgegen dem Uhrzeigersinn um die gestellfeste Drehachse 10, bis die über die Drehachse 10 hinausragende Fortsetzung 9a des Traglenkers 9 am Anschlag 13 anliegt. Dise Bewegung erfolgt entgegen einer Feder, die dem Traglenker 9 ein rechtsdrehendes Moment erteilt. Dabei folgt der untere Bereich der Schale 3 der bogenförmigen Bewegung der Drehachse 11, wohingegen der obere Bereich dieser Schale 3 mit der Kopfstütze 7,8 infolge der vorbeschriebenen Führung 16 geradlinig nach unten wandert. Diese Bewegung kann nur ausgeführt werden, wenn vorher eine hier nicht gezeigte Verriegelung gelöst wird. Nachdem sich der Anschlag 15 vom Anschlag 12 zu Beginn der Drehung entfernt hat und während der Drehung bleibt die Winkellage der Sitzgruppe 5,6 gegenüber der Rückenlehne 3,4 annähernd konstant. Dies wird dadurch erreicht, daß sich der Anschlag 15 nunmehr gegen den abgewinkelten Teil der Schale 3 abstützt. Bei Entlastung kehrt die Schale 5, wie vorbeschrieben, wieder in ihre Ruhelage zurück, wobei gleichzeitig, unter der Wirkung des auf den Traglenker 9 wirkenden Momentes, die Schale 7 wieder in ihre obere Position gelangt. Damit ist wieder die obere Gebrauchslage des Sitzes erreicht. Die untere Gebrauchslage, die im wesentlichen gegeben ist durch die Schräglage der Rückenlehne 3,4 und eine gegenüber dem Fußboden jetzt tiefer liegende Sitzgruppe 5,6, zeichnet sich aus durch eine erhöhte Bequemlichkeit. Diese ergibt sich daraus, daß die Rückenachse und die Achse der Unterschenkel einer den Sitz benutzenden Person etwa parallel verlaufen. Um die Bequemlichkeit des Sitzes weiter zu erhöhen, ist vorgesehen, daß praktisch jede Gebrauchslage eingestellt werden kann, die innerhalb des durch die obere und die untere Gebrauchslage bzw. durch die Endlagen des Traglenkers 9 begrenzten Bereiches möglich ist. In kinematischer Hinsicht bilden der Traglenker 9, die Rückenschale 3 und das Gelenk 18 gleichsam einen exzentrischen Kurbeltrieb mit der Exzentrizität e. Dabei fungieren die Schale 3 als Schubstange und das Gelenk 18 mit der Führung 16 als Kreuzkopf.

Fig. 4 zeigt die bereits erwähnte Verriegelung zum Fixieren der Schale 7 gegenüber dem Gestell 2. Seitens des Gestells ist eine Verzahnung 19 vorgesehen, in die ein mit einer Feder 20 belasteter Sperrschieber 21 eingreift. Die Verzahnung 19 und der Sperrschieber 21 bilden ein Richtungsgesperre, das eine Bewegung der Schale 7 nur nach oben ermöglicht. Nach unten wird die Schale 7 gegenüber dem Gestell 2 verriegelt. Mittels einer über ein Seil 22 eingeleiteten Bedienungsmaßnahme kann der Sperrschieber 21 entgegen der Kraft der Feder 20 aus der Verzahnung 19 ausgerückt werden, so daß jede unterhalb der oberen Gebrauchslage befindliche Position einstellbar ist. Bei Entlastung kehrt die Schale 3 trotz der Verriegelung wieder in ihre obere Gebrauchslage zurück.

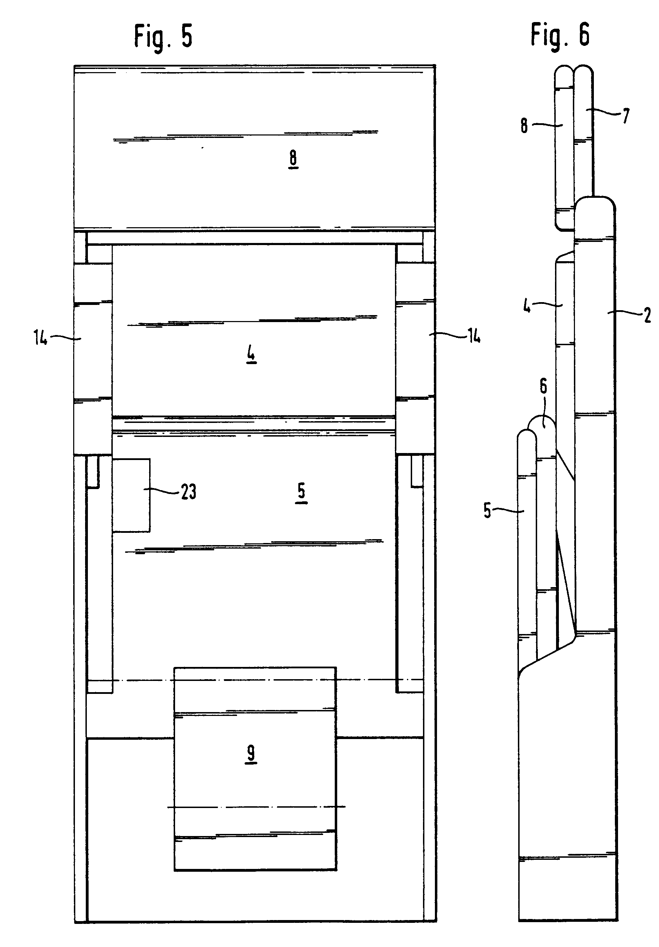

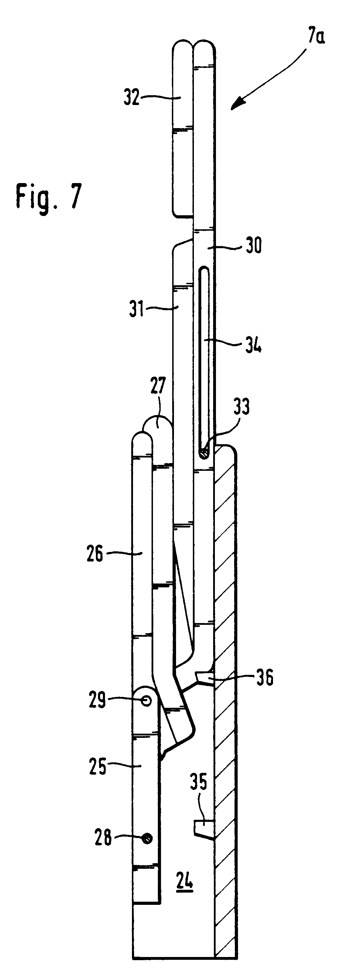

Die Fign. 5 und 6 zeigen den vorgenannten Sitz 1 in der Ansicht bzw. in der Seitenansicht. Die Bilder zeigen im einzelnen das Gestell 2 mit den Schalen 5 und 7 und den Polstern 4, 6 und 8. Weiterhin sind der Traglenker 9 und die Armlehnen 14 gezeigt. Links an der Unterseite der Schale 5 ist eine Drucktaste 23 angeordnet. Diese steht mit dem Seil 22 Wirkverbindung, so daß die Verriegelung 4a durch Druck auf diese Taste lösbar ist.

Fig. 7 zeigt eine andere Ausgestaltung der Erfindung in Form eines Sitzes 7a mit einem Gestell 24, einem Traglenker 25 und einer Sitzschale 26 mit einem Sitzpolster 27. Der Traglenker 25 ist um eine Achse 28 gegenüber dem Gestell 24 schwenkbar. Die Schale 26 ist um eine Achse 29 gegenüber dem Traglenker 25 schwenkbar. Weiterhin ist eine Rückenschale 30 mit einem Rückenpolster 31 und einem Kopfpolster 32 vorgesehen. Seitlich der Schale 30 ist je eine Führung 34 vorgesehen, in die je ein gestellfester Gleitstein 33 eingreift. Das Gestell 24 weist weiterhin zwei Anschläge 35 und 36 auf. Auch dieser Sitz 7a kann durch Schwenken des Traglenkers 25 in unterschiedliche Gebrauchslagen gebracht werden. In dieser Lage befindet sich der Gleitstein 33 am unteren Ende der Führung 34.

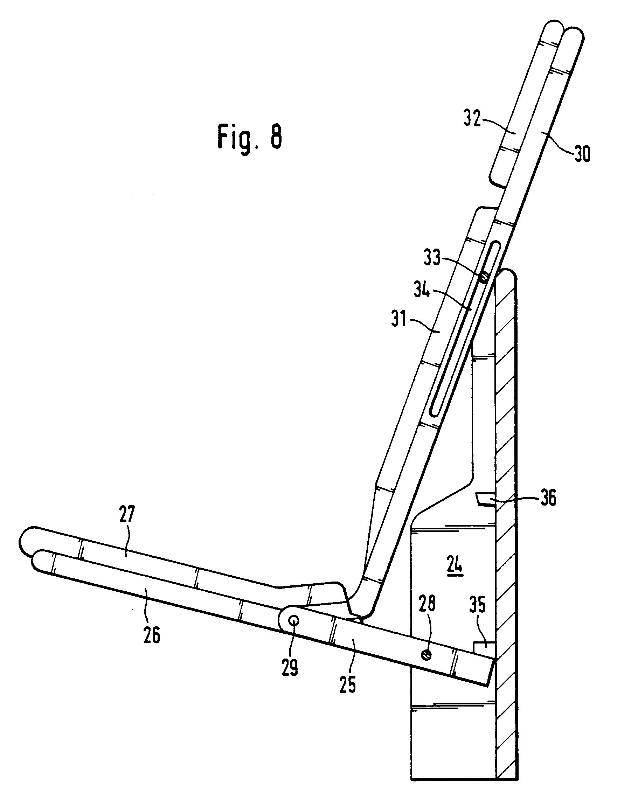

Fig. 8 zeigt den Sitz nach Fig. 7 mit den Elementen 25 bis 35 in der unteren Gebrauchslage, die sich dadurch ergibt, daß der Traglenker 25 am Anschlag 35 anliegt. In dieser Position befindet sich der Gleitstein 33 am oberen Ende der Führung 34. Hierdurch nimmt die Rückenschale 30 die gezeigte Schräglage ein, wobei das Kopfpolster 32 in vorteilhafter Weise mit dem Rückenpolster 31 annähernd in einer Ebene liegt. Zur Fixierung der Rückenschale 30 gegenüber dem Gestell 24 ist auch hier eine lösbare Verriegelung vorgesehen, die hier jedoch nicht gezeigt ist. Auch im Falle dieser Ausgestaltung bilden der Traglenker 25 und die Schale 30, kinematisch gesehen, wieder einen Kurbeltrieb, diesmal im Form einer Kurbelschleife, wobei der Traglenker 25 die Funktion der Kurbel und die Schale 30 die Funktion der Schubstange übernimmt. Wegen der nach hinten ausschwenkenden Kopfstütze ist dieser Sitz besonders zur Befestigung am Fußboden geeignet. Eine Montage an einer Kabinenwand ist auch möglich, wenn entsprechende konstruktive Vorkehrungen getroffen werden.

Die Erfindung ist nicht auf die dargestellten und beschriebenen Beispielausführungen beschränkt. Sie erstreckt sich vielmehr auf alle Ausgestaltungen, die im Rahmen der Ansprüche denkbar sind.

## Patentansprüche

1. Sitz (1), insbesondere für einen Flugbegleiter, im wesentlichen bestehend aus einem an der umgebenden Struktur fest montierbaren Gestell (2) sowie einem Sitzteil (5,6), mit einem vorderen und einem hinteren Bereich und einer Schale (3) für das Rückenpolster (4), mit einem oberen und einem unteren Bereich, wobei der Sitzteil (5,6) in einer in seinem hinteren Bereich angeordneten ersten Anlenkung (11) schwenkbar ausgebildet ist, so daß der Sitzteil (5,6) zwischen einer im wesentlichen horizontalen Gebrauchslage und einer im allgemeinen vertikalen Ruhelage schwenkbar ist, wobei die Schale (3) für das Rückenpolster in ihrem oberen Bereich eine zweite Anlenkung (18) derart aufweist, daß der untere Bereich der Schale (3) für das Rückenpolster in unterschiedliche Positionen schwenkbar ist, wobei die Schale (3) für das Rückenpolster (4) in ihrem unteren Bereich in der ersten Anlenkung (11) mit dem Sitzteil (5,6) um eine Achse (11) gelenkig verbunden ist, wobei ein um eine gestellfeste Achse (10) schwenkbarer Traglenker (9) vorgesehen ist, und wobei ein im oberen Bereich der Schale (3) angeordnetes Gelenk (18) eine Schwenkbewegung und eine Verschiebung zuläßt, so daß Traglenker (9) mit der Schale (3) im Prinzip einen Kurbeltrieb bildet, dadurch **gekennzeichnet,** daß das Sitzteil (5,6) und die Schale (3) für das Rückenpolster am äußeren Ende des Traglenkers (9) um eine gemeinsame Achse (11) schwenkbar angelenkt sind.

2. Sitz nach Anspruch 1, dadurch **gekennzeichnet,** daß eine Schale (7) für das Kopfpolster (8) mit der Schale (3) in dem Gelenk (18) schwenkbar verbunden ist und die Schale (7) mit dem Gelenk (18) in zwei seitlichen gestellfesten Geradführungen (16) annähernd vertikal geführt ist.

3. Sitz nach Anspruch 1, dadurch **gekennzeichnet,** daß für das Rückenpolster (4) und das Kopfpolster (8) eine gemeinsame Schale (30) vorgesehen ist, die zwei seitliche Geradführungen (34) aufweist, in denen jeweils ein gestellfester Gleitstein (33) geführt ist.

4. Sitz nach einem der Ansprüche 1 bis 3, dadurch **gekennzeichnet,** daß die Schale (7,30) für das Kopfpolster (8,32) einen Sperrschieber (20) aufweist, der mit einer gestellfesten Verzahnung (19) zusammenwirkt.

## Claims

1. A seat (1), particularly for a steward on an aircraft, substantially comprising a frame (2), fixed to the surrounding structure and a seat member (5,6) including a front and a rear portion and shell (3) for the back cushion (4), with an upper and a lower portion, wherein the seat member (5,6) is designed to pivot in a first pivot (11) located on its rear portion, so that the seat member (5,6) can be pivoted between a substantially horizontal position of use and a generally vertical inoperative position; wherein the shell (3) for the back cushion has a second pivot (18) in its upper portion, in such a way that the lower portion of the shell (3) for the back cushion can be pivoted into various positions, wherein, in its lower portion in the first pivot (11), the shell (3) for the back cushion (4) is hinged to the seat member (5,6) about a spindle (11), wherein a supporting guide (9) is provided, which is pivotable about a spindle (10) fixed to the frame, and wherein a hinged connection (18) located in the upper portion of the shell (3) allows pivoting movement and displacement, so that the supporting guide (9) basically forms a crank mechanism with the shell (3), characterised in that the seat member (5,6) and the shell (3) for the back cushion are hinged about a common spindle (11) at the outer end of the supporting guide (9).

2. The seat of claim 1, characterised in that a shell (7) for the head cushion (8) is pivotally connected to the shell (3) in the hinged connection (18) and the shell (7) with the hinged connection (18) is guided approximately vertically in two straight lateral guides (16) fixed to the frame.

3. The seat of claim 1, characterised in that a common shell (30) is provided for the back cushion (4) and the head cushion (8) and has two straight lateral guides (34) each containing a slide member (33) fixed to the frame.

4. The seat of any of claims 1 to 3, characterised in that the shell (7,30) for the head cushion (8,32) has a locking slide (21) which interacts with toothing (19) fixed to the frame.

## Revendications

1. Siège (1), en particulier pour un passager d'avion, consistant essentiellement en un châssis (2) pouvant être monté solidairement sur la structure environnante, ainsi qu'une partie siège (5, 6) avec une zone antérieure et une zone postérieure et une coquille (3) pour le coussin du dossier (4), avec une zone supérieure et une zone inférieure, la partie siège (5, 6) étant constituée de façon à pouvoir pivoter sur une première articulation (11) disposée dans sa zone postérieure, de telle sorte que la partie siège (5, 6) puisse pivoter entre une position d'utilisation sensiblement horizontale et une position de repos en général verticale, la coquille (3) pour le coussin du dossier présentant dans sa zone supérieure une deuxième articulation (18) de telle sorte que la zone inférieure de la coquille (3) puisse pivoter dans différentes positions, la coquille (3) pour le coussin du dossier (4) dans sa partie inférieure étant reliée au niveau de la première articulation (11) à la partie siège (5, 6) en étant articulée sur un axe (11), un bras support oscillant (9) pouvant pivoter étant prévu sur un axe (10) solidaire du châssis, et une articulation (18) disposée dans la zone supérieure de la coquille (3) permettant un mouvement de pivotement et une translation, de telle sorte que le bras support articulé (9) forme en principe avec la coquille (3) un biellage, siège caractérisé en ce que la partie siège (5, 6) et la coquille (3) pour le coussin du dossier sont articulés à l'extrémité extérieure du bras support articulé (9) et peuvent pivoter sur un axe commun (11).

2. Siège selon la revendication 1, caractérisé en ce qu'une coquille (7) pour le coussin de tête (8) est reliée de façon à pouvoir pivoter dans l'articulation (18) et la coquille (7) avec l'articulation (18) est guidée dans deux guides rectilignes (16) approximativement verticalement, solidaires, sur les côtés, du châssis.

3. Siège selon la revendication 1, caractérisé en ce que pour le coussin de dossier (4) et le coussin de tête (8) il est prévu une coquille commune (30), qui présente deux guides latéraux rectilignes (34), dans lesquels est guidé respectivement un bloc de glissement (33) solidaire du châssis.

4. Siège selon les revendications 1 à 3, caractérisé en ce que la coquille (7, 30) pour le coussin de tête (8, 32) présente un taquet de blocage (20), qui coopère avec une crémaillère (19) solidaire du châssis.

Fig. 1

Fig. 2

EP 0 349 762 B1

Fig. 4

Fig. 3

## Fig. 5

## Fig. 6

Fig. 7

# Fig. 8